# EUROPÄISCHE PATENTANMELDUNG

(11) **EP 1 679 292 A2**
(43) Veröffentlichungstag der Anmeldung: **12.07.2006**
(21) Anmeldenummer: 06450001.0
(22) Anmeldetag: 04.01.2006
(51) Int. Cl.: C04B 28/10, C09D 7/00, C04B 24/26, C04B 103/32

(54) **Kalkmasse**

(30) Priorität: 05.01.2005 AT 142005
(71) Anmelder: Gebr. Leube, 5083 St. Leonhard (AT)
(72) Erfinder: Kohlschütter, Reinhard, 5071 Wals (AT)
(74) Vertreter: Gibler, Ferdinand

(57) **Zusammenfassung**

Bei einer Kalkmasse, insbesondere Mineralfarbe auf Kalkbasis, aus gelöschtem Kalk und/oder Sumpfkalk, Wasser, einem Fließmittel und gegebenenfalls Zuschlagstoffen und/oder Pigmenten, wobei der Kalk in der Kalkmasse dispergiert vorliegt, wird zur Verbesserung der Verarbeitbarkeit vorgeschlagen, dass das Fließmittel Polycarboxylat umfasst.

## Beschreibung

Die Erfindung betrifft eine Kalkmasse, insbesondere eine Mineralfarbe auf Kalkbasis, aus gelöschtem Kalk und/oder Sumpfkalk, Wasser, einem Fließmittel und gegebenenfalls Zuschlagstoffen und/oder Pigmenten, wobei der Kalk in der Kalkmasse dispergiert vorliegt.

Es ist bekannt bei derartigen Kalkmassen Fließmittel in Form von verdünntem Natriumhydroxid zu verwenden. Nachteilig dabei ist, dass die bekannten Kalkmassen nur bedingt lagerstabil sind.

Aufgabe der vorliegenden Erfindung ist es, eine Kalkmasse der eingangs beschriebenen Art anzugeben, bei der die bekannten Nachteile vermieden sind, die eine hohe Lagerstabilität und die eine gute Verarbeitbarkeit aufweist.

Erfindungsgemäß wird dies dadurch erreicht, dass das Fließmittel Polycarboxylat umfasst.

Dadurch ergibt sich der Vorteil, dass die Nachverdickung erheblich verringert und eine lange Lagerstabilität erreicht wird. Es hat sich gezeigt, dass bei einer Lagerung bei 40°C selbst nach sechs Monaten eine Nachverdickung praktisch nicht gegeben ist. Weiters wird eine hohe Akzeptanz für Pigmente erreicht, wodurch eine intensive Einfärbung ermöglicht wird. Dabei können nicht nur Pastellfarben, wie im Stand der Technik, sondern auch intensive Farben erreicht werden. Weiters kann durch Einstellung einer geeigneten Viskosität ein sparsamer Verbrauch und eine hohe Ergiebigkeit sichergestellt werden. Weiters weist die erfindungsgemäße Kalkmasse bei Verwendung als Mineralfarbe auf Kalkbasis eine günstige Rheologiekurve auf, wobei die Farbe beim Auftragen mit einer Rolle kaum spritzt und an der Wand gut verfließt und nicht abrinnt.

In Weiterführung der Erfindung kann vorgesehen sein, dass das Fließmittel Polycarboxylat ist. Wird als Fließmittel lediglich Polycarboxylat verwendet, so kann eine besonderes lagerstabile und leicht zu verarbeitende Kalkmasse erreicht werden.

Gemäß einer weiteren Ausbildung der Erfindung kann vorgesehen sein, dass der Wassergehalt im Bereich von 30% bis 70%, vorzugsweise im Bereich von 40% bis 60%, insbesondere im Bereich von 45% bis 55%, liegt. Dadurch kann eine insbesondere für Anstriche geeignete Viskosität erreicht werden.

In weiterer Ausgestaltung der Erfindung kann vorgesehen sein, dass die Zuschlagstoffe organische Hilfsstoffe umfassen, wobei der Anteil der organischen Hilfsstoffe in der Kalkmasse im Bereich bis etwa 2% liegen. Durch die Zugabe von organischen Hilfsmittel kann eine hohe Elastizität der Kalkmasse erreicht werden.

Gemäß einem weiteren Ausführungsbeispiel der Erfindung kann vorgesehen sein, dass die Kalkmasse VOC-frei ist, wodurch der Austritt von organischen Verbindungen wirksam vermieden werden kann.

Vorteilhafterweise kann vorgesehen sein, dass der Gehalt an gelöschtem Kalk kleiner oder gleich 23 Gewichtsprozent, vorzugsweise zwischen 16 und 22,5 Gewichtsprozent, besonders bevorzugt 18 Gewichtsprozent, beträgt. Dabei ergibt sich eine besonders gute Lagerfähigkeit bei ebenfalls sehr guter Verarbeitbarkeit der Kalkmasse, insbesondere als Kalkfarbe.

Die Erfindung betrifft weiters ein Verfahren zur Herstellung einer oben beschriebenen Kalkmasse, wobei der Kalk in der Kalkmasse dispergiert vorliegt.

Weitere Aufgabe der Erfindung ist es, ein Verfahren zur Herstellung einer oben beschriebenen Kalkmasse anzugeben, die eine hohe Lagerstabilität und die eine gute Verarbeitbarkeit aufweist.

Erfindungsgemäß wird dies dadurch erreicht, dass als Fließmittel Polycarboxylat verwendet wird und während einer Dispergierung der Doughnut-Effekt erreicht wird und länger als 50min, vorzugsweise länger als 65 min, insbesondere länger als 75min, eingehalten wird.

Dadurch ergibt sich der Vorteil, dass eine große Homogenität und eine feine Dispersion der Kalkmasse erreicht wird, wodurch eine Nachverdickung weitgehend vermieden wird. Weiters kann durch die gewählte Haltezeit des Doughnut-Effektes ein besonders gleichmäßiger Energieeintrag in die gesamte Kalkmasse sichergestellt werden.

In weiterer Ausgestaltung der Erfindung kann vorgesehen sein, dass das Fließmittel während des letzten Drittels, vorzugsweise im letzten Viertel, insbesondere während des letzten Achtels, des Zeitintervalls der Dispergierung zugesetzt wird.

Es hat sich gezeigt, dass durch diese Wahl des Zeitpunktes der Zusetzung des Fließmittels die Lagerstabilität in besonderem Maße verbessert werden kann.

Die Erfindung wird in den nachfolgenden Ausführungsbeispielen näher beschrieben.

Kalkmassen aus gelöschtem Kalk und/oder Sumpfkalk, Wasser, einem Fließmittel und gegebenenfalls Zuschlagstoffen und/oder Pigmenten, wobei der Kalk in der Kalkmasse dispergiert vorliegt, sind bekannt und werden insbesondere für Anstriche, Farben, Verputze od. dgl. verwendet. Bei dem in der Kalkmasse, insbesondere in der Kalkfarbe, dispergierten gelöschten Kalk handelt es sich chemisch um Kalziumhydroxid Ca(OH)₂.

Bei einer erfindungsgemäßen Kalkmasse umfasst das Fließmittel Polycarboxylat. Unter Polycarboxylaten sind in diesem Zusammenhang wasserlösliche, lineare Polymere mit einer, zwei oder mehreren, vorzugsweise zahlreichen Carboxy-Gruppen bzw. die Salze dieser Verbindungen zu verstehen. Mit Carboxy-Gruppe ist eine Atomgruppierung der chemischen Formel -COOH gemeint. Bei den Salzen handelt es sich vorzugsweise um Alkalimetallsalze, insbesondere Natrium- und/oder Kaliumsalze. Bei der Verwendung von Polycarboxylaten wurde festgestellt, dass im Vergleich zu anderen Fließmitteln, wie beispielsweise verdünntem Natriumhydroxid, eine überraschende Verbesserung der Lagerfähigkeit und der Verarbeitbarkeit erreicht wird.

Im Gegensatz zu herkömmlichen Kalkmassen weisen erfindungsgemäße Kalkmassen eine erheblich verringerte Nachverdickung auf, welche annähernd vollständig vermieden ist. Weiters weist die Kalkmasse eine hohe Akzeptanz für Pigmente auf, wodurch eine intensive Einfärbung ermöglicht wird, die bei bisher bekannten Kalkmassen nicht erreicht werden kann. Bei diesen aus dem Stand der Technik bekannten Kalkmassen kann die Abtönung lediglich im Pastellbereich durchgeführt werden.

Weiters kann bei der Verwendung der erfindungsgemäßen Kalkmasse als Mineralfarbe auf Kalkbasis die Viskosität auf einfache Weise so eingestellt werden, dass durch die verbesserte Verarbeitbarkeit auch eine deutliche Reduktion des Verbrauchs auftritt. Dabei weist die Kalkmasse eine günstige Rheologiekurve auf, wobei die Farbe beim Auftragen mit einer Rolle kaum spritzt und an der Wand gut verfließt und nicht abrinnt.

Durch die Wahl von Polycarboxylat als im Wesentlichen alleiniges Fließmittel kann eine besonders lagerstabile und gut verarbeitbare Kalkmasse erzielt werden.

Der Wassergehalt der Kalkmasse kann im Bereich von 30% bis 70%, vorzugsweise im Bereich von 40% bis 60%, insbesondere im Bereich von 45% bis 55%, liegen. Eine besonders gut verarbeitbare Mineralfarbe auf Kalkbasis konnte mit einem Wassergehalt von etwa 50% erreicht werden.

In der Kalkmasse können geringe Mengen organischer Bindemittel als Zuschlagstoff vorhanden sein, wobei die Menge an organischen Hilfsstoffen vorzugsweise im Bereich bis etwa 2% liegen.

Als besonders günstig erscheint es, die Kalkmasse VOC-frei auszubilden, wodurch der Austritt von organischen Verbindungen wirksam vermieden wird.

Der Gehalt an Kalziumhydroxid Ca(OH)₂ kann vorzugsweise kleiner oder gleich 23 Gewichtsprozent betragen, bevorzugt sind Werte zwischen 16 und 22,5 Gew.%, insbesondere 16, 17, 18, 19, 20, 21, 22 und 22,5 Gew.%.

Als Zuschlagstoffe für die Kalkmasse können neben organischen Hilfsstoffen insbesondere Kaolin, Glimmermehl, Titandioxid oder Mischungen dieser Zuschlagstoffe vorgesehen sein.

Es hat sich gezeigt, dass die erfindungsgemäße Kalkmasse durch Beimischung eines Granulates (0,1 bis 2 mm) auch für Strukturputze besonders geeignet ist. Auch hier bewirkt der günstige Verlauf der Rheologiekurve eine gute Lagerstabilität und verhindert das Absetzen des Granulates während der Verarbeitung.

Die erfindungsgemäße Kalkmasse kann vorzugsweise dadurch hergestellt werden, dass während einer Dispergierung der Doughnut-Effekt erreicht wird und länger als 50min, vorzugsweise länger als 65min, insbesondere länger als 75min, eingehalten wird.

Der Doughnut-Effekt bezeichnet ein Fließbild, bei dem an der Behälterwand keine stehenden Zonen vorhanden sind und eine Trombe ausgebildet ist. Die Ausbildung des Doughnut-Effektes ist insbesondere von der Drehzahl abhängig. Nach Ausbildung des Doughnut-Effektes ist sichergestellt, dass am Behälterrand keine Bereiche mit einer schlechten Durchmischung verbleiben und ein guter Energieeintrag in die Kalkmasse erfolgt.

Eine besonders lagerstabile, leicht verarbeitbare und gut einfärbbare Kalkmasse wird erreicht, wenn das Fließmittel während des letzten Drittels, vorzugsweise im letzten Viertel, insbesondere während des letzten Achtels, des Zeitintervalls der Dispergierung zugesetzt wird. Ein bevorzugter Zeitpunkt der Zugabe ist ca. 10% vor Ende der Dispergierung.

## Patentansprüche

1. Kalkmasse, insbesondere Mineralfarbe auf Kalkbasis, aus gelöschtem Kalk und/oder Sumpfkalk, Wasser, einem Fließmittel und gegebenenfalls Zuschlagstoffen und/oder Pigmenten, wobei der Kalk in der Kalkmasse dispergiert vorliegt, **dadurch gekennzeichnet, dass** das Fließmittel Polycarboxylat umfasst.

2. Kalkmasse nach Anspruch 1, **dadurch gekennzeichnet, dass** das Fließmittel Polycarboxylat ist.

3. Kalkmasse nach Anspruch 1 oder 2, **dadurch gekennzeichnet, dass** der Wassergehalt im Bereich von 30% bis 70%, vorzugsweise im Bereich von 40% bis 60%, insbesondere im Bereich von 45% bis 55%, liegt.

4. Kalkmasse nach Anspruch 1, 2 oder 3, **dadurch gekennzeichnet, dass** die Zuschlagstoffe organische Hilfsstoffe umfassen, wobei der Anteil der organischen Hilfsstoffe in der Kalkmasse im Bereich bis etwa 2% liegen.

5. Kalkmasse nach einem der Ansprüche 1 bis 4, **dadurch gekennzeichnet, dass** sie VOC-frei ist

6. Kalkmasse nach einem der Ansprüche 1 bis 5, **dadurch gekennzeichnet, dass** der Gehalt an gelöschtem Kalk kleiner oder gleich 23 Gewichtsprozent, vorzugsweise zwischen 16 und 22,5 Gewichtsprozent, besonders bevorzugt 18 Gewichtsprozent, beträgt.

7. Verfahren zur Herstellung einer Kalkmasse nach einem der Ansprüche 1 bis 6, wobei der Kalk in der Kalkmasse dispergiert vorliegt, **dadurch gekennzeichnet, dass** als Fließmittel Polycarboxylat verwendet wird und während einer Dispergierung der Doughnut-Effekt erreicht wird und länger als 50min, vorzugsweise länger als 65min, insbesondere länger als 75min, eingehalten wird.

8. Verfahren nach Anspruch 7, **dadurch gekennzeichnet, dass** das Fließmittel während des letzten Drittels, vorzugsweise im letzten Viertel, insbesondere während des letzten Achtels, des Zeitintervalls der Dispergierung zugesetzt wird.
